(19) Europäisches Patentamt
European Patent Office
Office européen des brevets

(11) **EP 4 656 743 A1**

(12) **EUROPEAN PATENT APPLICATION**
published in accordance with Art. 153(4) EPC

(43) Date of publication:
**03.12.2025 Bulletin 2025/49**

(21) Application number: **24780911.4**

(22) Date of filing: **29.03.2024**

(51) International Patent Classification (IPC):
*C21D 8/12* (2006.01)     *C22C 38/00* (2006.01)
*C22C 38/60* (2006.01)     *H01F 1/147* (2006.01)

(52) Cooperative Patent Classification (CPC):
**C21D 8/12; C22C 38/00; C22C 38/60; H01F 1/147**

(86) International application number:
**PCT/JP2024/013321**

(87) International publication number:
**WO 2024/204818 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.03.2023 JP 2023054306**

(71) Applicant: **JFE Steel Corporation
Tokyo 100-0011 (JP)**

(72) Inventors:
• **SHINGAKI, Yukihiro
Tokyo 100-0011 (JP)**
• **SERA, Ayaka
Tokyo 100-0011 (JP)**
• **YAMADA, Takuya
Tokyo 100-0011 (JP)**

(74) Representative: **Hoffmann Eitle
Patent- und Rechtsanwälte PartmbB
Arabellastraße 30
81925 München (DE)**

(54) **METHOD FOR PRODUCING GRAIN-ORIENTED ELECTRICAL STEEL SHEET, PRODUCTION FACILITY LINE FOR GRAIN-ORIENTED ELECTRICAL STEEL SHEET, AND HOT ROLLED SHEET FOR GRAIN-ORIENTED ELECTRICAL STEEL SHEET**

(57)     Provided is a method of producing a grain-oriented electrical steel sheet having excellent magnetic properties over the entire coil length. The method includes a process of casting molten steel having a defined chemical composition to obtain a slab having a thickness of 30 mm to 180 mm; a process of subjecting the slab to rough rolling and finish rolling to obtain a hot-rolled sheet, where (I) the rough rolling is started in 5 min or less from a time when a surface temperature of the slab drops to 1200 °C, while the surface temperature of the slab is in a range from 900 °C to 1150 °C, and; (II) after completion of the rough rolling, while maintaining the surface temperature of the slab in a range from 850 °C to 1200 °C, starting the finish rolling in 5 min or less from the completion of the rough rolling; a process of cooling the hot-rolled sheet under a condition that a surface temperature of the hot-rolled sheet is lowered to 650 °C in a cooling time of 200 s or less; and subsequent processes of cold rolling, decarburization annealing, and final annealing.

*FIG. 2*

**Description**

TECHNICAL FIELD

The present disclosure relates to a method of producing a grain-oriented electrical steel sheet, a production line for a grain-oriented electrical steel sheet, and a hot-rolled sheet for a grain-oriented electrical steel sheet. In particular, the present disclosure relates to a method of producing a grain-oriented electrical steel sheet having stable magnetic properties by utilizing a process for producing a hot-rolled coil continuously from casting.

BACKGROUND

Grain-oriented electrical steel sheets are a material mainly used for iron cores of transformers and the like. In recent years, there has been an increasing demand for energy-saving iron cores. Accordingly, there is a demand for better magnetic properties, namely low iron loss and high magnetic flux density, for grain-oriented electrical steel sheets that are a material for iron cores.

A grain-oriented electrical steel sheet has a crystal structure in which the <001> orientation, which is an easy magnetization axis of iron, is highly aligned with the rolling direction of the steel sheet. Such texture is formed in the production process of the grain-oriented electrical steel sheet, in particular during secondary recrystallization in final annealing, which preferentially causes large growth of crystal grains in the {110}[001] orientation, also known as the Goss orientation. Accordingly, the crystal orientation of secondary recrystallized grains has a great influence on the magnetic properties of grain-oriented electrical steel sheets.

Conventionally, grain-oriented electrical steel sheets are produced by the following process. A steel slab containing 4.5 mass% or less of Si, and further containing inhibitor-forming elements such as MnS, MnSe, AlN, and BN, is heated to 1300 °C or more and then hot-rolled to obtain a hot-rolled sheet. The hot-rolled sheet is then subjected to hot-rolled sheet annealing as required, then cold rolling once, or two or more times with intermediate annealing in between, to obtain a cold-rolled sheet. The cold-rolled sheet is then subjected to decarburization annealing in a wet hydrogen atmosphere to carry out primary recrystallization and decarburization, thereby obtaining a decarburized annealed sheet. After applying an annealing separator mainly composed of MgO to the decarburized annealed sheet, the steel sheet is subjected to final annealing at 1200 °C for about 5 h for secondary recrystallization and purification of inhibitor-forming elements (see, for example, Patent Literature (PTL) 1 to 3).

Typically, in the production of grain-oriented electrical steel sheets, high-temperature slab heating is essential for dissolving the inhibitor-forming elements, and therefore the production costs are extremely high. To address this issue, methods of enabling secondary recrystallization without the inclusion of inhibitor-forming elements, known as inhibitorless methods, have been developed (see, for example, PTL 4). This method involves a completely different technical concept from conventional methods of producing grain-oriented electrical steel sheets. That is, according to conventional methods, precipitates (inhibitors) such as MnS, MnSe, and AlN are used to induce secondary recrystallization. In contrast, an inhibitorless method does not use these inhibitors, but rather high purity to decrease resistance to grain boundary migration, thereby making the inherent difference in grain boundary migration rate that depends on grain boundary properties apparent, and succeeding in realizing secondary recrystallization. Accordingly, compared to a case where a conventional inhibitor is used, high temperature slab heating for dissolving inhibitor-forming elements may be avoided.

When an inhibitorless method is applied, a normal slab heating furnace (gas furnace) is used for slab heating at a low temperature. A strong inhibitor is not included, and therefore when trace elements that have grain growth inhibiting capability are mixed into the steel, there have been cases where quality within the slab becomes uneven due to uneven temperatures in the heating furnace.

As one means for avoiding high temperature slab heating, processes for obtaining hot rolled coils continuously from cast slabs are also being investigated. For example, in the technology described in PTL 5, after casting a slab having a maximum thickness of 70 mm, hot rolling is started at a temperature exceeding 1200 °C to produce a hot-rolled coil, thereby successfully producing a hot-rolled coil suitable for a grain-oriented electrical steel sheet process that uses a conventional inhibitor.

Further, as a process for obtaining hot-rolled coils continuously from cast slabs, in order to reproduce a "completely dissolved state of an inhibitor after slab reheating" that is carried out in normal hot rolling, a method has been considered in which hot rolling is started at a temperature exceeding 1200 °C after casting, as indicated in PTL 5, but this process is fraught with production difficulties.

CITATION LIST

Patent Literature

PTL 1: US 1965559 A
PTL 2: JP S40-015644 B2
PTL 3: JP S51-13469 B2
PTL 4: JP 2000-129356 A
PTL 5: JP 2008-069391 A

SUMMARY

(Technical Problem)

As described above, an inhibitorless method does not include strong inhibitor components, and therefore when uneven heating occurs during slab heating in hot rolling, for example due to skidding, differences in grain growth may occur, resulting in a non-uniform microstructure, and when trace components are mixed in, this problem may be accentuated.

On the other hand, in order to apply the process of obtaining hot-rolled coils continuously from slabs that are cast thinner than usual to the production of grain-oriented electrical steel sheets, it is necessary to carry out hot rolling while maintaining an extremely high temperature in order to achieve a complete solid solution state of precipitates before the start of hot rolling, leaving a problem for stable production.

That is, there is a need for a method of producing a grain-oriented electrical steel sheet having stable and excellent magnetic properties throughout an entire coil length by advantageously solving the above problems in a process of obtaining hot-rolled coils continuously from slabs while using a chemical composition in accordance with an inhibitorless method.

In view of the above problems, it would be helpful to provide a method of producing a grain-oriented electrical steel sheet and a production line for a grain-oriented electrical steel sheet that are capable of producing a grain-oriented electrical steel sheet that has excellent magnetic properties throughout an entire coil length. Further, it would be helpful to provide a hot-rolled sheet for a grain-oriented electrical steel sheet that is a material of a grain-oriented electrical steel sheet that has excellent magnetic properties.

(Solution to Problem)

The process of obtaining hot-rolled coils continuously from slabs (hereinafter also referred to as a casting and hot rolling continuous process) can omit a step of slab reheating, and therefore has the potential to suppress a cause of quality variation resulting from grain growth during slab reheating that is specific to inhibitorless methods. On the other hand, the chemical composition according to an inhibitorless method contains almost no inhibitor-forming elements, and therefore it is expected that a state of complete solid solution can be maintained even when slab temperature is lowered to a relatively low temperature after casting. Therefore, the inventors arrived at the conclusion that by combining the casting and hot rolling continuous process with an inhibitorless method, it may be possible to more stably produce a grain-oriented electrical steel sheet having good magnetic properties.

However, simply subjecting molten steel having a chemical composition according to an inhibitorless method to the casting and hot rolling continuous process has not only failed to provide good magnetic properties, but has also failed to induce secondary recrystallization. As a result of intensive research, the inventors have arrived at the findings indicated under (1) to (6) below.

(1) When a chemical composition according to an inhibitorless method is used, excessive grain growth may occur, depending on wait time and transport time after working in hot rolling. By maintaining an appropriate rolling reduction, excessive coarsening of microstructure can be suppressed, and deterioration of texture prior to secondary recrystallization can be prevented. Appropriate slab thickness depends on the capacity of the hot rolling mill and is therefore not generally determined. However, when hot rolling is carried out entirely at a high temperature, grain growth is more likely to occur and therefore high reduction rolling is required, whereas when hot rolling is carried out at a relatively low temperature, desired microstructure control is possible under low reduction rolling, and there is a tendency for slab thickness at the time of casting to be thinner.

(2) By using a chemical composition suitable for an inhibitorless method, a state of complete solid solution or a state in which precipitation of trace amounts of components does not proceed can be maintained for a certain period of time even when the slab temperature is low, such as 1200 °C or less. The inventors have confirmed through experiments that precipitation does not proceed for about 5 min after a surface temperature of a cast slab drops to 1200 °C. Therefore, starting rough rolling in 5 min or less from a time when slab surface temperature drops to 1200 °C after casting is recommended, while the slab surface temperature is within a defined range (900 °C or more and 1150 °C or less). In 3 min or less is preferred.

However, the speed at which steel is typically cast is very slow, and therefore depending on line length it may be difficult to start rough rolling within the recommended time described above. In this case, a situation in which slab temperature after casting gradually decreases is undesirable, and it is preferable to install a heating apparatus (furnace) having a temperature higher than slab surface temperature to avoid the situation in which the slab temperature gradually decreases. By suppressing a temperature drop of a slab by a heating apparatus and carrying out soaking treatment, it is possible to allow extra time until the start of rough rolling. However, when the time until the start of rough rolling exceeds 20 min, precipitation of inhibitor components present in small amounts partially proceeds, promoting non-uniform microstructure and destabilizing the secondary recrystallization.

(3) It is desirable to carry out rough rolling in two or more passes. The reason for this is that when a slab is cast to a relatively large thickness, unsolidified molten steel may remain in a central portion of the slab, and therefore forcing solidified portions into contact with each other during the first pass of rough rolling is necessary. In this way, hot rolling microstructure can be created in second and subsequent passes. Heavy working introduces dislocations into the microstructure, and by introducing new recrystallization nuclei, excessive coarsening of the microstructure is suppressed and uniform crystal grain size can be maintained.

(4) When the rough rolling according to (3), above, has been carried out, it is particularly important to carry out the following process. Dislocations function as nuclei for recrystallization and also as nuclei for the formation of precipitates. Therefore, inhibitor-forming elements that are present in trace amounts and not completely "0" content are in a state of a certain amount of precipitation after rough rolling. However, when heavy working under pressure is carried out in the final stand of rough rolling, dislocations are introduced relatively uniformly into the microstructure, and non-uniform precipitation can be avoided. When slab surface temperature at the start of finish rolling is outside a defined temperature range (850 °C to 1200 °C) or when a time from the end of rough rolling to the start of finish rolling exceeds 5 min, dispersion of precipitates becomes non-uniform, which will even affect secondary recrystallization. In the casting and hot rolling continuous process, when sheet passing speed is slow and line length is long, the time from the end of rough rolling to the start of finish rolling may exceed 5 min. In such a case, there is a method of increasing rolling reduction in rough rolling and elongating the slab in the rolling direction to increase the sheet passing speed. However, when slab thickness is decreased by rough rolling, slab temperature drops significantly, making it difficult to maintain a target temperature, and therefore it becomes necessary to provide heating apparatus as required. In particular, the time from the end of rough rolling to the start of finish rolling is a condition that should be strongly reflected in the line structure.

(5) After finish rolling, dislocation density becomes higher than after rough rolling, making precipitates more likely to form. By cooling to a low temperature in a shorter time, non-uniform precipitation of inhibitor-forming elements can be suppressed.

(6) It has become clear that by optimizing the production conditions described above, it is possible to produce a hot-rolled sheet in which the content of precipitated Al, targeting Al nitrides that typically function as inhibitors, is only 1/4 or less of the content of acid-soluble Al originally contained in the steel. Such a hot-rolled sheet avoids uneven precipitation of trace elements that can cause secondary recrystallization defects during the casting and hot rolling continuous process, and has sufficient properties to be used as a base metal for a grain-oriented electrical steel sheet that has an inhibitorless chemical composition.

The present disclosure is made based on these discoveries, and primary features are as described below.

[1] A method of producing a grain-oriented electrical steel sheet, the method comprising:

a process of casting molten steel having a chemical composition containing (consisting of) C: 0.08 mass% or less, Si: 2.0 mass% or more and 4.5 mass% or less, Mn: 0.5 mass% or less, acid-soluble Al: 20 mass ppm or more and 120 mass ppm or less, S: less than 50 mass ppm, and N: less than 80 mass ppm, with the content of Se, Te, and O each suppressed to less than 50 mass ppm, and the balance being Fe and inevitable impurity, to obtain a slab having a thickness of 30 mm to 180 mm;
a process of subjecting the slab to rough rolling and finish rolling to obtain a hot-rolled sheet, wherein

(I) the rough rolling is started in 5 min or less from a time when a surface temperature of the slab drops to 1200 °C, while the surface temperature of the slab is in a range from 900 °C to 1150 °C, and
(II) after completion of the rough rolling, while maintaining the surface temperature of the slab in a range from 850 °C to 1200 °C, starting the finish rolling in 5 min or less from the completion of the rough rolling;

a process, after the finish rolling is completed, of cooling the hot-rolled sheet under a condition that a surface temperature of the hot-rolled sheet is lowered to 650 °C in a cooling time of 200 s or less; and subsequent processes of cold rolling, decarburization annealing, and final annealing.

[2] A method of producing a grain-oriented electrical steel sheet, the method comprising:

a process of casting molten steel having a chemical composition containing (consisting of) C: 0.08 mass% or less, Si: 2.0 mass% or more and 4.5 mass% or less, Mn: 0.5 mass% or less, acid-soluble Al: 20 mass ppm or more and 120 mass ppm or less, S: less than 50 mass ppm, and N: less than 80 mass ppm, with the content of Se, Te, and O each suppressed to less than 50 mass ppm, and the balance being Fe and inevitable impurity, to obtain a slab having a thickness of 30 mm to 180 mm;

a process, after a surface temperature of the slab is lowered to 1200 °C or less, of holding the slab in an atmosphere of 1000 °C or more and 1250 °C or less for 5 min to 20 min;

a subsequent process of subjecting the slab to rough rolling and finish rolling to obtain a hot-rolled sheet, wherein

(I) the rough rolling is started while the surface temperature of the slab is in a range from 900 °C to 1150 °C, and

(II) after completion of the rough rolling, while maintaining the surface temperature of the slab in a range from 850 °C to 1200 °C, starting the finish rolling in 5 min or less from the completion of the rough rolling;

a process, after the finish rolling is completed, of cooling the hot-rolled sheet under a condition that a surface temperature of the hot-rolled sheet is lowered to 650 °C in a cooling time of 200 s or less; and subsequent processes of cold rolling, decarburization annealing, and final annealing.

[3] The method of producing a grain-oriented electrical steel sheet according to [1] or [2], above, wherein the rough rolling is carried out in a final stand under conditions of a rolling reduction of 20 % or more and 50 % or less and a strain rate of 1.0 s$^{-1}$ or more and 50 s$^{-1}$ or less.

[4] The method of producing a grain-oriented electrical steel sheet according to any one of [1] to [3], above, wherein after completion of the rough rolling, before the finish rolling, the slab is subjected to a heat treatment to maintain the surface temperature of the slab in a range from 850 °C to 1200 °C.

[5] The method of producing a grain-oriented electrical steel sheet according to any one of [1] to [4], above, wherein the chemical composition further contains, in mass%, one or more selected from the group consisting of Ni: 0.005 % to 1.50 %, Sn: 0.001 % to 0.50 %, Sb: 0.005 % to 0.50 %, Cu: 0.01 % to 0.50 %, P: 0.0050 % to 0.50 %, Cr: 0.01 % to 1.50 %, Mo: 0.01 % to 0.50 %, B: 0.0001 % to 0.0200 %, Nb: 0.0005 % to 0.0100 %, Bi: 0.0001 % to 0.0200 %, and Ti: 0.0001 % to 0.0200 %.

[6] A production line for a grain-oriented electrical steel sheet, the production line comprising, in order:

a continuous casting machine configured to continuously cast molten steel to produce a slab;

a rougher configured to carry out rough rolling on the slab;

a finisher configured to carry out finish rolling on the slab after the rough rolling to produce a hot-rolled sheet; and

a coiler configured to coil the hot-rolled sheet;

as well as:

a first heat treatment apparatus disposed between the continuous casting machine and the rougher and configured to adjust a surface temperature of the slab to 900 °C or more and 1200 °C or less;

a second heat treatment apparatus disposed between the rougher and the finisher and configured to adjust the surface temperature of the slab after the rough rolling to 850 °C or more and 1200 °C or less; and

a third heat treatment apparatus disposed between the finisher and the coiler and configured to adjust a surface temperature of the hot-rolled sheet to 650 °C or less in 200 s or less after the end of the finish rolling, wherein

the production line has a sheet passing capacity for passing the slab from the rougher to the finisher in 5 min or less.

[7] The production line for a grain-oriented electrical steel sheet according to [6], above, wherein the rougher has a rolling capacity in a final stand such that a rolling reduction is 20 % or more and 50 % or less and a strain rate is 1.0 s$^{-1}$ or more and 50 s$^{-1}$ or less.

[8] A hot-rolled sheet for a grain-oriented electrical steel sheet, the hot-rolled sheet having a chemical composition containing (consisting of) C: 0.08 mass% or less, Si: 2.0 mass% or more and 4.5 mass% or less, Mn: 0.5 mass% or less, acid-soluble Al: 20 mass ppm or more and 120 mass ppm or less, S: less than 50 mass ppm, and N: less than 80 mass ppm, with the content of Se, Te, and O each suppressed to less than 50 mass ppm, and the balance being Fe and inevitable impurity, wherein a value obtained by dividing the content of precipitated Al by the content of the acid-soluble Al is 0.25 or less.

[9] The hot-rolled sheet for a grain-oriented electrical steel sheet according to [8], above, wherein the chemical composition further contains, in mass%, one or more selected from the group consisting of Ni: 0.005 % to 1.50 %, Sn: 0.001 % to 0.50 %, Sb: 0.005 % to 0.50 %, Cu: 0.01 % to 0.50 %, P: 0.0050 % to 0.50 %, Cr: 0.01 % to 1.50 %, Mo: 0.01 % to 0.50 %, B: 0.0001 % to 0.0200 %, Nb: 0.0005 % to 0.0100 %, Bi: 0.0001 % to 0.0200 %, and Ti: 0.0001 % to 0.0200 %.

(Advantageous Effect)

According to the method of producing a grain-oriented electrical steel sheet and the production line for a grain-oriented electrical steel sheet according to the present disclosure, it is possible to produce a grain-oriented electrical steel sheet that has excellent magnetic properties throughout an entire coil length. Further, by using the hot-rolled sheet for a grain-oriented electrical steel sheet according to the present disclosure as a material, a grain-oriented electrical steel sheet that has excellent magnetic properties is obtainable.

According to the present disclosure, it is possible to solve both the problem of non-uniform microstructure when reheating a slab, which is likely to occur in an inhibitorless method, and the problem that hot rolling needs to be carried out at an ultra-high temperature in the casting and hot rolling continuous process. Therefore, grain-oriented electrical steel sheets can be stably produced using the casting and hot rolling continuous process.

BRIEF DESCRIPTION OF THE DRAWINGS

In the accompanying drawings:

FIG. 1 is a schematic diagram illustrating a production line 100 for a grain-oriented electrical steel sheet according to the present disclosure; and
FIG. 2 is a graph illustrating change in surface temperature of a slab obtained by continuous casting under Conditions 1 to 3 of Example Group 3.

DETAILED DESCRIPTION

[Method of producing a grain-oriented electrical steel sheet]

The method of producing a grain-oriented electrical steel sheet according to an embodiment of the present disclosure includes a process of casting molten steel having a defined chemical composition to obtain a slab, a process of rough rolling and finish rolling the slab to obtain a hot-rolled sheet, a process of cooling the hot-rolled sheet, and then processes of cold rolling, decarburization annealing, and final annealing.

(Slab chemical composition)

First, chemical composition of the slab is described. In the following description, "%" regarding components denotes "mass%" unless otherwise specified. Similarly, "ppm" refers to mass ppm unless otherwise specified.

C: 0.08 % or less

When C remains in the steel sheet as a finished product, C causes magnetic aging, resulting in magnetic deterioration. When C content of the slab is excessive, the load in a decarburization process increases, and the C content of the steel sheet as a finished product cannot be sufficiently decreased. The C content of the slab is therefore 0.08 % or less. On the other hand, C has a function of suppressing coarsening of crystal grains during hot rolling and improving microstructure before cold rolling. Further, in cold rolling, C improves texture after primary recrystallization through interaction with dislocations. From this viewpoint, the C content is preferably 0.01 % or more.

Si: 2.0 % or more and 4.5 % or less

Si is an element that exhibits an effect of decreasing iron loss by increasing electrical resistance. To obtain this effect, Si content is 2.0 % or more. On the other hand, when the Si content is excessive, cold rolling becomes very difficult, and therefore the Si content is 4.5 % or less.

Mn: 0.5 % or less

When Mn content is too high, primary recrystallized texture degrades, and secondary recrystallized grains highly concentrated in the Goss orientation become unobtainable. In view of the above, the Mn content is 0.5 % or less. On the other hand, Mn is an element that exhibits an effect of improving hot workability. From the viewpoint of obtaining this effect, the Mn content is preferably 0.01 % or more.

Acid-soluble Al: 20 ppm or more and 120 ppm or less

The present disclosure relates to an inhibitorless method, and therefore it is necessary to greatly decrease Al content, which is an inhibitor-forming component. From this viewpoint, the Al content is 120 ppm or less. When an inhibitorless method is applied, and only secondary recrystallization is considered, Al is not necessarily required. However, Al has an effect of decreasing the amount of O that becomes an impurity, during a refining stage of molten steel, and also forms a dense $Al_2O_3$ film on the surface during secondary recrystallization annealing, which can decrease the effects of nitridation and the like from the atmosphere. The Al content is therefore 20 ppm or more.

S: less than 50 ppm, N: less than 80 ppm

The present disclosure relates to an inhibitorless method, and therefore it is necessary to greatly decrease S and N content, which are inhibitor-forming components. When the S content and the N content are excessive, precipitation tends to proceed in the casting and hot rolling continuous process, resulting in a non-uniform microstructure. Therefore, the S content is less than 50 ppm, and the N content is less than 80 ppm. A lower limit of the S content and the N content is preferably 0 ppm. However, completely removing S and N is difficult, and an extreme decrease in S and N leads to a significant increase in production costs. From the viewpoint of production costs, the S content is preferably 10 ppm or more. The N content is preferably 20 ppm or more.

Se, Te, and O: less than 50 ppm each

When Se content and Te content are excessive, Se and Te compounds are formed, making secondary recrystallization difficult. These elements are known to segregate centrally during casting. According to the present disclosure, in which the slab is not reheated and is hot-rolled directly after casting, Se and Te may remain as coarse precipitates centrally in the cast slab, which decreases ductility during subsequent cold rolling and embrittles the steel sheet. Therefore, the Se content and the Te content are each less than 50 ppm. The Se content and the Te content are preferably 30 ppm or less. Further, O forms oxides, which remain as inclusions in the final product and degrade magnetic properties, and therefore the O content needs to be kept below 50 ppm. The content of Se, Te, and O may be 0 ppm.
The balance, other than the components described above, consists of Fe and inevitable impurity, but may optionally contain the following elements.

Ni: 0.005 % to 1.50 %

Ni serves to increase uniformity of the texture of the hot-rolled sheet, and thus improve magnetic properties. From the viewpoint of obtaining this effect, Ni content is preferably 0.005 % or more. On the other hand, when the Ni content is excessive, secondary recrystallization becomes unstable, and magnetic properties degrade. Therefore, when Ni is contained, the Ni content is 1.50 % or less.

Sn: 0.001 % to 0.50 %, Sb: 0.005 % to 0.50 %, Cu: 0.01 % to 0.50 %

Sn, Sb, and Cu are sometimes regarded as auxiliary inhibitors through grain boundary segregation, but may be useful in an inhibitorless method that does not actively utilize inhibitors by precipitation. From this viewpoint, Sn content is preferably 0.001 % or more. Sb content is preferably 0.005 % or more. Cu content is preferably 0.01 % or more. On the other hand, when the content of these elements is excessive, the possibility of secondary recrystallization defects increases. Therefore, when these elements are contained, the content of each of these elements is 0.50 % or less.

P: 0.0050 % to 0.50 %, Cr: 0.01 % to 1.50 %

P and Cr have an effect of improving a forsterite film-forming reaction. From the viewpoint of obtaining this effect, P content is preferably 0.0050 % or more. Cr content is preferably 0.01 % or more. On the other hand, when the content of these elements is too high, forsterite film formation may be promoted too much, which may cause the film to peel off. Therefore, when these elements are contained, the P content is 0.50 % or less, and the Cr content is 1.50 % or less.

Mo: 0.01 % to 0.50 %, B: 0.0001 % to 0.0200 %, Nb: 0.0005 % to 0.0100 %, Bi: 0.0001 % to 0.0200 %, and Ti: 0.0001 % to 0.0200 %

Each of these elements contributes to grain growth suppression and has an effect of improving texture and stabilizing secondary recrystallization. From the viewpoint of obtaining these effects, Mo content is preferably 0.01 % or more. B content is preferably 0.0001 % or more. Nb content is preferably 0.0005 % or more. Bi content is preferably 0.0001 % or more. Ti content is preferably 0.0001 % or more. On the other hand, when the content of these elements is excessive, they function as inhibitors, which is not desirable in an inhibitorless method. Therefore, when these elements are contained, the Mo content is 0.50 % or less, the B content is 0.0200 % or less, the Nb content is 0.0100 % or less, the Bi content is 0.0200 % or less, and the Ti content is 0.0200 % or less.

(Casting process)

According to the present embodiment, first, molten steel having the chemical composition described above is cast to obtain a slab having a thickness of 30 mm to 180 mm. By appropriately adjusting the thickness of the cast slab, it becomes possible to sufficiently control microstructure during subsequent hot rolling. When the thickness of the slab is less than 30 mm, rolling reduction in the rough rolling and the finish rolling cannot be increased. When the rolling reduction in the rough rolling is insufficient, microstructure uniformity is lost. When the rolling reduction in the finish rolling is insufficient, dislocation density is not sufficiently accumulated during the finish rolling, and recrystallization is insufficient in the subsequent process of hot-rolled sheet annealing. When the thickness of the slab exceeds 180 mm, the angle of engagement with the rollers becomes large, making it difficult to apply heavy working to the slab. As a result, the rolling reduction per pass decreases, and similarly to the case of a thickness of less than 30 mm described above, the introduction of dislocations becomes insufficient, resulting in a shortage of recrystallization nuclei and a loss of uniformity in the microstructure.

(Hot rolling process)

Following continuous casting, the slab is subjected to rough rolling and finish rolling to obtain a hot-rolled sheet.
Here, according to a first embodiment, (I) the rough rolling is started in 5 min or less from a time when a surface temperature of the slab drops to 1200 °C, while the surface temperature of the slab is in a range from 900 °C to 1150 °C. Then, (II) after completion of the rough rolling, while maintaining the surface temperature of the slab in a range from 850 °C to 1200 °C, the finish rolling is started in 5 min or less from the completion of the rough rolling.
According to a second embodiment, after the surface temperature of the slab drops to 1200 °C or less, the slab is held in an atmosphere of 1000 °C or more and 1250 °C or less for 5 min to 20 min. Then, (I) the rough rolling is started while the surface temperature of the slab is in a range from 900 °C to 1150 °C. Then, (II) after completion of the rough rolling, while maintaining the surface temperature of the slab in a range from 850 °C to 1200 °C, the finish rolling is started in 5 min or less from the completion of the rough rolling.

Slab surface temperature at start of rough rolling: 900 °C or more and 1150 °C or less

The slab obtained by casting is then directly subjected to rough rolling. Rough rolling is started when the slab surface temperature is in a range from 900 °C to 1150 °C. When the slab surface temperature at the start of rough rolling is less than 900 °C, precipitated Al content in the hot-rolled sheet becomes excessive, resulting in degradation of magnetic properties of the grain-oriented electrical steel sheet. When the slab surface temperature exceeds 1150 °C at the start of rough rolling, there is a possibility that breakout will occur, in which unsolidified molten steel in the center of the slab breaks through a slab surface layer (solidified layer) and flows out. According to the present disclosure, by using an inhibitorless composition, it becomes possible to cool the slab to 1200 °C or lower while suppressing precipitation in the steel, and therefore production can be carried out more stably.

Time from when surface temperature of slab drops to 1200 °C to when rough rolling begins: 5 min or less (first embodiment)

When heating is not carried out from outside the production line, the slab temperature gradually decreases from casting to the start of rough rolling. In this case, a driving force for precipitation gradually increases. When the time from when the surface temperature of the slab drops to 1200 °C until the start of rough rolling is long, precipitated Al content in the hot-rolled sheet becomes excessive, and magnetic properties of the grain-oriented electrical steel sheet degrade. Therefore, according to the first embodiment, the time is 5 min or less. The time is preferably 3 min or less. When the time is too short, the slab surface temperature at the start of rough rolling becomes high, which may result in breakout. Therefore, the time is preferably 1.0 min or longer.

Slab hold temperature after surface temperature of slab drops below 1200 °C (second embodiment)

Excessive casting speed can result in breakouts. For this reason, when line length to the rougher is long, rough rolling cannot be started within the recommended time of the first embodiment. In such a case, to avoid a gradual increase in the driving force for precipitation, the time until the start of rough rolling can be extended to 20 min by external heating of the slab to maintain temperature. Specifically, the following process can be added prior to the rough rolling.

That is, after the surface temperature of the slab drops to 1200 °C or less, the slab is held in an atmosphere of 1000 °C or more and 1250 °C or less for 5 min to 20 min. Specifically, after the surface temperature of the slab drops to 1200 °C or less, the slab is charged into a furnace and heated. From the viewpoint of suppressing a decrease in the slab surface temperature at the start of rough rolling and staying within the above recommended range, the atmospheric temperature in the furnace is 1000 °C or more and 1250 °C or less. The atmospheric temperature in the furnace is preferably about 100 °C (50 °C to 150 °C) more than the surface temperature of the slab when charged into the furnace. When the hold time is less than 5 min, the effect of holding the slab temperature cannot be sufficiently obtained, whereas when the hold time exceeds 20 min, inhibitor components contained in small amounts partially precipitate, resulting in a non-uniform microstructure. According to the present embodiment, slabs are continuously fed to the next process, and therefore an open furnace such as a tunnel furnace is necessarily used. However, when a more airtight structure can be applied, the furnace temperature may be set to the target temperature. Even in a case where such isothermal holding is required, the hold time is preferably as short as possible.

Preferred conditions for rough rolling: in final stand, rolling reduction is 20 % or more and 50 % or less, and strain rate is 1.0 s$^{-1}$ or more and 50 s$^{-1}$ or less

The number of passes in the rough rolling is not particularly limited. The number of passes is preferably 2 passes or more. The number of passes is preferably 7 passes or less. When a slab is relatively thick, there may be some molten steel that has not yet solidified remaining in the center of the slab. For this reason, the solidified portions are preferably forcibly brought into contact with each other in the first pass of rough rolling. Thereafter, hot rolling microstructure can be created in second and subsequent passes. In rough rolling, the microstructure is heavily worked to introduce dislocations, and new recrystallization nuclei are introduced to suppress excessive coarsening of the microstructure and maintain a uniform crystal grain size. For this reason, the rolling reduction in the final stand is preferably 20 % or more and the strain rate is preferably 1.0 s$^{-1}$ or more. There are no particular limitations on an upper limit of the rolling reduction and the strain rate in the final stand, but even when excessively heavy working is carried out, the effect of maintaining uniform crystal grain size reaches saturation, and apparatus with a high load capacity becomes required. Therefore, from the viewpoint of using cheaper apparatus, the rolling reduction in the final stand is preferably 50 % or less and the strain rate is preferably 50 s$^{-1}$ or less.

The strain rate $\varepsilon$ is calculated using the following Ekelund expression.

[Math. 1]

$$\varepsilon \fallingdotseq \frac{v_R}{\sqrt{R'}\, h_1} \frac{2}{2-r} \cdot \sqrt{r}$$

Here, $v_R$ is roller peripheral velocity in mm/s, R' is roller radius in mm, $h_1$ is roller entry side slab thickness in mm, and r is rolling reduction in %.

Slab surface temperature at start of finish rolling: 850 °C or more and 1200 °C or less

Time from end of rough rolling to start of finish rolling: 5 min or less

Dislocations introduced by rough rolling function as nuclei for recrystallization and also function as nuclei for the formation of precipitates. Therefore, inhibitor-forming elements that are present in trace amounts and not completely "0" content undergo a certain amount of precipitation after rough rolling. Precipitation progresses between rough rolling and finish rolling. For this reason, after completion of rough rolling, the surface temperature of the slab needs to be maintained in a range from 850 °C to 1200 °C, and finish rolling needs to be started in 5 min or less from the completion of the rough rolling. When the temperature is outside this range or when the time until the start of finish rolling is prolonged, the precipitation of inhibitor-forming elements proceeds and the dispersion of the inhibitor-forming elements becomes non-uniform, which affects even the secondary recrystallization. When sheet passing speed is slow and line length is long, the time from the end of rough rolling to the start of finish rolling may exceed 5 min. In such a case, there is a method of increasing rolling reduction in rough rolling and elongating the slab in the rolling direction to increase the sheet passing speed. However, when slab thickness is decreased by rough rolling, slab temperature drops significantly, making it difficult to maintain the slab temperature in a defined range at the start of finish rolling, and therefore it becomes necessary to provide heating apparatus as required. However, the time from the end of rough rolling to the start of finish rolling cannot be extended even when heating apparatus is provided. For this reason, it is necessary to configure the line taking this time into consideration. A lower limit of the time from the end of rough rolling to the start of finish rolling is not particularly limited, and may be 0 s or more. The thickness of the hot-rolled sheet after finish rolling is preferably 1.3 mm or more. The thickness is preferably 3.5 mm or less.

The surface temperature of the hot-rolled sheet at the end of finish rolling (final finish temperature) exceeds 650 °C. From the viewpoint of rolling stability, the surface temperature is preferably 700 °C or more. The surface temperature is preferably 1100 °C or less.

(Cooling process)

After the finish rolling is completed, the hot-rolled sheet is cooled under a condition that the cooling time until the surface temperature of the hot-rolled sheet drops to 650 °C is 200 s or less. After the finish rolling, dislocation density becomes higher than after the rough rolling, making precipitates more likely to form. By cooling to a low temperature in a shorter time, non-uniform precipitation of inhibitor-forming elements can be suppressed. The cooling time is therefore 200 s or less. A lower limit of the cooling time is not particularly limited.

(Subsequent processes)

Thereafter, the steel sheet is subjected to cold rolling, decarburization annealing, and final annealing to produce a steel sheet product. The following describes these subsequent processes.

First, the hot-rolled sheet is optionally subjected to hot-rolled sheet annealing. The hot-rolled sheet is then subjected to cold rolling once, or two or more times with intermediate annealing in between, to obtain a cold-rolled sheet. The cold rolling may be carried out at room temperature. Alternatively, the cold rolling may be warm rolling where rolling is carried out with the hot-rolled sheet temperature raised to a temperature higher than room temperature, for example around 250 °C.

The cold-rolled sheet is then subjected to decarburization annealing to obtain a decarburized annealed sheet. This decarburization annealing is also called primary recrystallization annealing. A first purpose of this annealing is to cause primary recrystallization of the cold-rolled sheet having a rolled microstructure and to adjust primary recrystallized grain size to an optimum size for secondary recrystallization. A second purpose of this annealing is to decarburize carbon contained in the steel by using a wet hydrogen-nitrogen or wet hydrogen-argon atmosphere, and at the same time, to form an oxide film on the surface by using the annealing atmosphere. For these purposes, it is desirable that the annealing temperature (hold temperature) of the decarburization annealing is approximately 800 °C or more and less than 950 °C. Further, in order to improve texture, it is effective to increase the heating rate in the heating process of the decarburization annealing. Specifically, an improvement can be expected by increasing the heating rate between 500 °C and 700 °C to 80 °C/s or more.

An annealing separator is then applied to the surface of the decarburized annealed sheet. In order to form a forsterite film on the surface of the steel sheet after final annealing, magnesia (MgO) is used as the main component of the annealing separator. The formation of the forsterite film can be further favored by adding an appropriate amount of Ti oxide, Sr compound, or the like to the separator. In particular, the addition of an auxiliary agent that promotes uniform forsterite film formation is also advantageous for improving peeling properties of the film.

Subsequently, final annealing is carried out for secondary recrystallization and forsterite film formation. The annealing atmosphere may be any of $N_2$, Ar, $H_2$, or a mixture thereof. Precipitation of trace components in the final product leads to degradation of magnetic properties, and therefore the maximum annealing temperature is preferably 1100 °C or more for component purification. The grain-oriented electrical steel sheet obtained according to the present disclosure has little variation in magnetic properties within a coil, and therefore from the viewpoint of economic efficiency, final annealing is preferably carried out for a coil weighing 5 tonnes or more. Final annealing is more preferably carried out for a coil weighing 10 tonnes or more.

After the final annealing, an insulating coating may be further applied to the steel sheet surface and baked. Such an insulating coating is not limited to a particular type, and any known insulating coating is applicable. For example, a preferred method is described in JP S50-79442 A and JP S48-39338 A, where a coating solution containing phosphate-chromate-colloidal silica is applied on a steel sheet and then baked at a temperature of around 800 °C.

Regarding the grain-oriented electrical steel sheet obtained as the final product, as a result of purification during final annealing, the chemical composition of the steel sheet base steel from which the insulating coating and forsterite film have been removed is as follows. The chemical composition contains Si: 2.0 mass% to 4.5 mass%, Mn: 0.01 mass% to 0.5 mass%, acid-soluble Al: 10 mass ppm or more and less than 60 mass ppm, S: 5 mass ppm or more and less than 50 mass ppm, and the content of Se, Te, and O are each suppressed to be less than 50 mass ppm. Further, other elements may be incorporated into the forsterite film, or release into a gas phase may occur, depending on final annealing conditions, and content in the steel may decrease, and therefore concentration may decrease from that in the slab.

[Hot-rolled sheet for grain-oriented electrical steel sheet]

The hot-rolled sheet for a grain-oriented electrical steel sheet according to an embodiment of the present disclosure is a hot-rolled sheet obtained after the cooling process in the production method described above. The chemical composition of the hot-rolled sheet in the present embodiment is the same as the composition of the slab described above, and therefore the description of the composition of the slab applies here.

In the hot-rolled sheet according to the present embodiment, non-uniform precipitation of trace elements that cause secondary recrystallization defects is avoided in the continuous process from casting to hot rolling, and therefore the hot-rolled sheet has sufficient properties as a base metal for a grain-oriented electrical steel sheet that has an inhibitorless chemical composition. That is, the hot-rolled sheet of the present embodiment is characterized in that a value obtained by dividing the precipitated Al content by the acid-soluble Al content is 0.25 or less. In an inhibitorless method, precipitates are not necessarily required for secondary recrystallization. However, when precipitates (Al nitrides) are non-uniformly precipitated, grain growth also becomes non-uniform, making it difficult for the effect of texture inhibition specific to an inhibitorless method to be exhibited, resulting in poor secondary recrystallization. In the case of a hot-rolled sheet, when the sheet is held at high temperature for a long time after precipitation, precipitates (Al nitrides) cause Ostwald ripening and localization. By suppressing the precipitation rate in the hot-rolled sheet, non-uniformity caused by such localization can be alleviated to a certain extent. By employing the production method according to the present embodiment, a value obtained by dividing the precipitated Al content by the acid-soluble Al content can be made 0.25 or less. The lower the value, the better, and the value may be 0.00 or more.

The precipitated Al content is determined by removing a surface layer portion from the surface of the hot-rolled sheet to 1/4 sheet thickness (hereinafter also referred to as surface layer 1/4), using the remaining mid-thickness part as a test piece, electrolyzing the test piece using a 10 % AA electrolytic solution (acetylacetone), filtering, extracting, and analyzing the Al content of the residue. The acid-soluble Al content is a value obtained by a conventional wet analysis.

The content of other inhibitor-forming elements such as S, Se, and Te is preferably 0 ppm. Even when these elements are not completely removed and remain, an average precipitate particle size of precipitates of these elements (MnS, MnSe, MnTe) can be 80 nm or less to achieve uniform precipitation.

[Production line for grain-oriented electrical steel sheet]

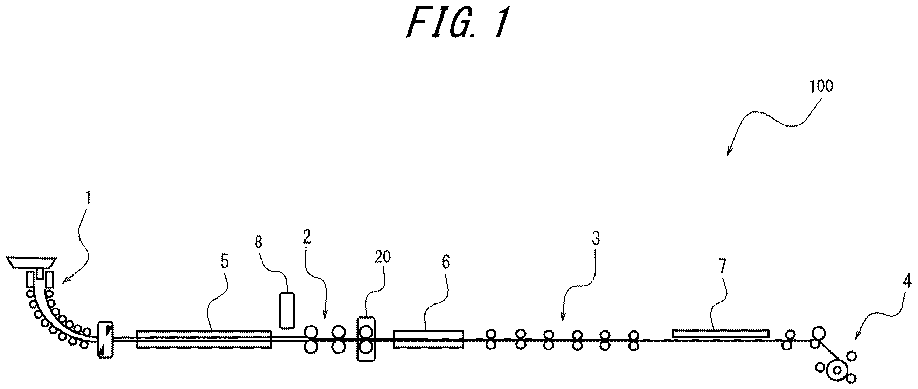

Referring to FIG. 1, a production line 100 for a grain-oriented electrical steel sheet according to an embodiment of the present disclosure includes a continuous casting machine 1, a rougher 2, a finisher 3, and a coiler 4 arranged in that order, and is capable of carrying out a casting and hot rolling continuous process. The continuous casting machine 1 continuously casts molten steel to produce slabs. The rougher 2 carries out rough rolling on slabs obtained by the continuous casting machine 1. The finisher 3 carries out finish rolling on slabs after the rough rolling to produce hot-rolled sheets. The coiler 4 coils obtained hot-rolled sheets into hot-rolled coils.

The production line 100 for a grain-oriented electrical steel sheet includes a first heat treatment apparatus 5, a second heat treatment apparatus 6, and a third heat treatment apparatus 7.

The first heat treatment apparatus 5 is disposed between the continuous casting machine 1 and the rougher 2, and adjusts slab surface temperature to 900 °C or more and 1200 °C or less. In the first heat treatment apparatus 5, slab surface temperature immediately before entry into the rougher 2 is measured by a temperature measurer 8, and slab temperature is controlled so that this measured value becomes a target temperature (900 °C or more and 1200 °C or less). Here, when slab thickness is thin, temperature drop proceeds easily, whereas when slab thickness is thick, temperature drops more slowly. The hold time in the first heat treatment apparatus 5 is determined by the distance from the continuous casting machine 1 to the rougher 2 and the casting speed. For this reason, it is necessary to subject the slab after continuous casting to cooling at an appropriate cooling rate and to control the temperature to a target temperature. For this purpose, it is desirable that the first heat treatment apparatus 5 is an apparatus having functions of water cooling, natural cooling, heat retention, and heating. In particular, when casting at a fixed slab thickness and casting speed, it is necessary to have one or more of the above-mentioned functions to achieve the target temperature.

The second heat treatment apparatus 6 is disposed between the rougher 2 and the finisher 3, and adjusts slab surface temperature after rough rolling to 850 °C or more and 1200 °C or less. The transport time from the rougher 2 to the finisher 3 needs to be short, and therefore the distance between the rougher where the second heat treatment apparatus 6 is disposed and the finisher needs to be determined so that slab surface temperature after rough rolling becomes the target temperature of 850 °C or more and 1200 °C or less. Accordingly, in order to achieve the target temperature at the entry side of the finisher 3, it is desirable for the second heat treatment apparatus 6 to have each of the functions of natural cooling, heat retention, and heating. As with the first heat treatment apparatus 5, when the slab thickness, temperature and passing speed are fixed to a certain extent, it is sufficient that the apparatus has one or more of the above-mentioned functions.

Typically, rough rolling tends to make slabs thinner and lower slab temperature, and therefore a heating function is required. This heating requires a mechanism to control temperature at a fixed distance, and therefore the use of induction heating is effective.

The third heat treatment apparatus 7 is disposed between the finisher 3 and the coiler 4, and adjusts a surface temperature of the hot-rolled sheet to 650 °C or less in 200 s or less after the end of finish rolling. The third heat treatment apparatus 7 mainly controls cooling in order to adjust the surface temperature of the hot-rolled sheet after finish rolling to 650 °C or less, and needs to have a water-cooling mechanism in order to decrease the surface temperature of the hot-rolled sheet to 650 °C or less in a limited time.

The production line 100 for a grain-oriented electrical steel sheet needs to have a passing capacity that enables movement of a slab from the rougher 2 to the finisher 3 in 5 min or less.

The rougher 2 preferably has a rolling capacity in the final stand such that the rolling reduction is 20 % or more. The rolling reduction is preferably 50 % or less. The rougher 2 preferably has a rolling capacity in the final stand such that the strain rate is 1.0 $s^{-1}$ or more. The strain rate is preferably 50 $s^{-1}$ or less.

EXAMPLES

[Example Group 1]

Molten steel having a chemical composition containing C: 0.05 %, Si: 3.2 %, Mn: 0.05 %, acid-soluble Al: 80 ppm, S: 20 ppm, N: 30 ppm, Se: 5 ppm or less, Te: 5 ppm or less, O: 20 ppm or less, P: 0.01 %, and Cr: 0.03 %, with the balance being Fe and inevitable impurity, was refined. The molten steel was then continuously cast to obtain slabs having the thicknesses listed in Table 1. Next, continuous from casting, hot rolling consisting of rough rolling (total of 4 passes) and finish rolling was carried out under a set of conditions including those listed in Table 1 to obtain hot-rolled sheets having the thicknesses listed in Table 1, and then, again continuously, the hot-rolled sheets were cooled under a set of conditions including those listed in Table 1. After the finish rolling was completed, the cooling times until the surface temperature of the hot-rolled sheets reached 650 °C were adjusted by controlling amounts of water.

Test pieces were taken from portions of the obtained hot-rolled sheets by the method described above, and the precipitated Al content was determined. Table 1 lists the precipitated Al content and the values obtained by dividing the precipitated Al content by the acid-soluble Al content (precipitated Al/Sol. Al).

The hot-rolled sheets were subjected to hot-rolled sheet annealing at a soaking temperature of 1020 °C for a soaking time of 40 s, and then scale was removed by pickling. The hot-rolled sheets were then cold-rolled to a final sheet thickness of 0.27 mm to obtain cold-rolled sheets. The cold-rolled sheets were subjected to annealing for decarburization and primary recrystallization to obtain decarburized annealed sheets. Thereafter, an annealing separator mainly composed of MgO was applied to the surface of each decarburized annealed sheet, and final annealing including a secondary recrystallization process and a purification process was carried out under a set of conditions including a maximum temperature of 1200 °C and a soaking time of 10 h to obtain final annealing steel sheets. An insulation coating consisting of 60 % colloidal silica and aluminum phosphate was applied to the surface of the final annealing steel sheets and baked at 800 °C to obtain the final grain-oriented electrical steel sheets.

32 Epstein test pieces were taken from each of the obtained grain-oriented electrical steel sheets, and magnetic flux density ($B_8$) was measured by the Epstein test. Average values of magnetic flux density ($B_8$) are listed in Table 1. As is clear from Table 1, the grain-oriented electrical steel sheets produced under conditions according to the present disclosure have good magnetic properties.

Table 1

| No. | Casting and hot rolling continuous process | | | | | | | | | Hot-rolled sheet | | | Product sheet | Classification |
| | Slab thickness at casting (mm) | Time between casting and rough rolling (*1) (min) | Slab surface temp. at start of rough rolling (°C) | Rough rolling final stand | | Time between rough rolling and finish rolling (min) | Slab surface temp. at start of finishing rolling (°C) | Final finishing temp. (°C) | Cooling time (*2) (s) | Thickness (mm) | Precipitated Al content (ppm) | Precipitated Al/Sol. Al | $B_8$ (T) | |
| | | | | Rolling reduction (%) | Strain rate ($s^{-1}$) | | | | | | | | | |
| 1 | 25 | 2 | 1100 | 30 | 4 | 2 | 1000 | 900 | 130 | 3.5 | 15 | 0.19 | 1.869 | Comparative Example |
| 2 | 30 | 2 | 1100 | 30 | 4 | 2 | 1000 | 800 | 100 | 1.8 | 9 | 0.11 | 1.905 | Example |
| 3 | 80 | 4 | 1090 | 30 | 4 | 4 | 990 | 900 | 100 | 2.4 | 17 | 0.21 | 1.902 | Example |
| 4 | 80 | 6 | 1080 | 40 | 4 | 4 | 980 | 900 | 100 | 2.4 | 22 | 0.28 | 1.765 | Comparative Example |
| 5 | 80 | 0.8 | 1270 | Breakout during rough rolling | | | | | | | | | | Comparative Example |
| 6 | 80 | 5 | 880 | 30 | 4 | 5 | 850 | 800 | 90 | 2.0 | 23 | 0.29 | 1.878 | Comparative Example |
| 7 | 80 | 2 | 1100 | 15 | 2 | 4 | 1010 | 950 | 100 | 2.3 | 18 | 0.23 | 1.898 | Example |
| 8 | 80 | 5 | 1080 | 15 | 0.8 | 7 | 1000 | 930 | 100 | 2.4 | 25 | 0.31 | 1.757 | Comparative Example |
| 9 | 80 | 5 | 900 | 40 | 4 | 4 | 830 | 700 | 90 | 2.0 | 23 | 0.29 | 1.873 | Comparative Example |
| 10 | 120 | 1 | 1000 | 35 | 4 | 1 | 990 | 870 | 80 | 2.4 | <5 | <0.06 | 1.909 | Example |
| 11 | 120 | 3 | 900 | 20 | 3 | 5 | 880 | 770 | 180 | 2.4 | 18 | 0.23 | 1.901 | Example |
| 12 | 120 | 3 | 950 | 20 | 3 | 5 | 900 | 810 | 220 | 2.4 | 26 | 0.33 | 1.810 | Comparative Example |
| 13 | 180 | 2 | 1150 | 20 | 8 | 1 | 1100 | 1000 | 60 | 3.0 | <5 | <0.06 | 1.908 | Example |

13

EP 4 656 743 A1

| No. | Slab thickness at casting (mm) | Casting and hot rolling continuous process | | | | | | | | Hot-rolled sheet | | | Product sheet | Classification |
| | | Time between casting and rough rolling (*1) (min) | Slab surface temp. at start of rough rolling (°C) | Rough rolling final stand | | Time between rough rolling and finish rolling (min) | Slab surface temp. at start of finishing rolling (°C) | Final finishing temp. (°C) | Cooling time (*2) (s) | Thickness (mm) | Precipitated Al content (ppm) | Precipitated Al/Sol. Al | $B_8$ (T) | |
| | | | | Rolling reduction (%) | Strain rate ($s^{-1}$) | | | | | | | | | |
| 14 | 200 | 5 | 1090 | 35 | 10 | 3 | 1080 | 980 | 60 | 3.4 | 15 | 0.19 | 1.854 | Comparative Example |

(*1) Time from when slab surface temperature drops to 1200 °C to start of rough rolling
(*2) Cooling time, after finish rolling completed, until hot-rolled sheet surface temperature reaches 650 °C

[Example Group 2]

Molten steel having the chemical compositions listed in Table 2 (the balance being Fe and inevitable impurity) was refined. Next, under the conditions of No. 3 from Example Group 1, casting, hot rolling consisting of rough rolling and finish rolling, and cooling were carried out to obtain rolled sheets.

Test pieces were taken from portions of the obtained hot-rolled sheets by the method described above, and the precipitated Al content was determined. Table 2 lists the precipitated Al content and the values obtained by dividing the precipitated Al content by the acid-soluble Al content (precipitated Al/Sol. Al). Further, for test pieces taken in the same way, a 1 mm$^2$ cross section in the rolling direction was subjected to SEM observation, and arithmetic mean values of individual particle sizes of precipitated MnS were taken as average particle size. Results are listed in Table 2.

The hot-rolled sheets were subjected to hot-rolled sheet annealing at a soaking temperature of 900 °C for a soaking time of 60 s, and scale was removed by pickling. Thereafter, first cold rolling to a thickness of 1.5 mm, intermediate annealing at a maximum arrival temperature of 1050 °C, and second cold rolling were carried out to obtain cold-rolled sheets having a final sheet thickness of 0.23 mm. The cold-rolled sheets were subjected to annealing for decarburization and primary recrystallization to obtain decarburized annealed sheets. Thereafter, an annealing separator mainly composed of MgO was applied to the surface of each decarburized annealed sheet, and final annealing including a secondary recrystallization process and a purification process was carried out under a set of conditions including a maximum temperature of 1150 °C and a soaking time of 10 h to obtain final annealing steel sheets. An insulation coating consisting of colloidal silica and magnesium phosphate was applied to the surface of the final annealing steel sheets and baked at 850 °C to obtain the final grain-oriented electrical steel sheets.

32 Epstein test pieces were taken from each of the obtained grain-oriented electrical steel sheets, and magnetic flux density ($B_8$) was measured by the Epstein test. Average values of magnetic flux density ($B_8$) are listed in Table 2. As is clear from Table 2, the grain-oriented electrical steel sheets produced under conditions according to the present disclosure have good magnetic properties.

Table 2

| No. | Chemical composition of slab | | | | | | | | | | Hot-rolled sheet | | | Product sheet | Classification |
|---|---|---|---|---|---|---|---|---|---|---|---|---|---|---|---|
| | C (%) | Si (%) | Mn (%) | Sol. Al (ppm) | S (ppm) | N (ppm) | Se (ppm) | Te (ppm) | O (ppm) | Other (%) | Precipitated Al (ppm) | Precipitated Al/sol.Al | MnS average particle size (nm) | $B_8$ (T) | |
| 1 | | | | 80 | 25 | 40 | ≤5 | ≤5 | ≤20 | - | 17 | 0.21 | 30 | 1.903 | Example |
| 2 | | | | 80 | 25 | 40 | ≤5 | ≤5 | ≤20 | Sb:0.026 P:0.055 | 18 | 0.23 | 30 | 1.906 | Example |
| 3 | | | | 80 | 25 | 90 | ≤5 | ≤5 | ≤20 | Sb:0.026 P:0.060 | 22 | 0.28 | 30 | 1.888 | Comparative Example |
| 4 | | | | 50 | 20 | 30 | ≤5 | ≤5 | ≤20 | Mo:0.01 B:0.0005 | 11 | 0.22 | 25 | 1.906 | Example |
| 5 | | | | 70 | 35 | 30 | ≤5 | ≤5 | ≤20 | Ni:0.010 | 15 | 0.21 | 40 | 1.905 | Example |
| 6 | 0.06 | 3.35 | 0.03 | 120 | 40 | 60 | ≤5 | ≤5 | ≤20 | Cr:0.04 | 26 | 0.22 | 60 | 1.904 | Example |
| 7 | | | | 150 | 40 | 60 | ≤5 | ≤5 | ≤20 | Cr:0.04 | 40 | 0.27 | 60 | 1.870 | Comparative Example |
| 8 | | | | 40 | 30 | 25 | ≤5 | ≤5 | ≤20 | Cu:0.015 Nb:0.001 P:0.0050 | 9 | 0.23 | 35 | 1.905 | Example |
| 9 | | | | 40 | 60 | 25 | ≤5 | ≤5 | ≤20 | Cu:0.022 Nb:0.001 P:0.0085 | 9 | 0.23 | 90 | 1.885 | Comparative Example |

[Example Group 3]

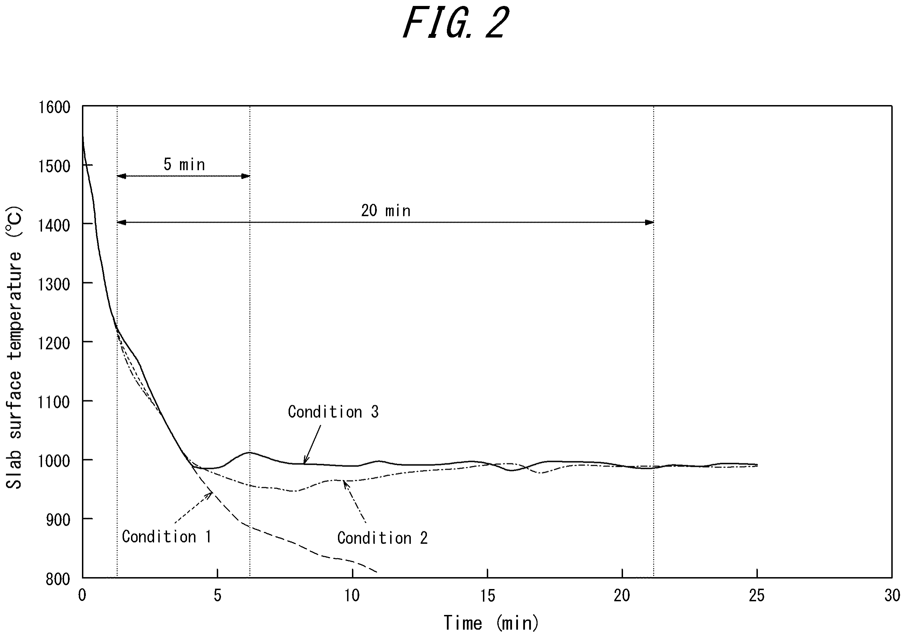

Molten steel having a chemical composition containing C: 0.08 %, Si: 3.4 %, Mn: 0.07 %, acid-soluble Al: 100 ppm, S: 10 ppm, N: 60 ppm, Se: 5 ppm or less, Te: 5 ppm or less, and O: 20 ppm or less, with the balance being Fe and inevitable impurity, was refined. The molten steel was then continuously cast to obtain slabs each having a thickness of 40 mm. The following experiments were carried out: Condition 1, in which the slab was allowed to cool after casting; Condition 2, in which the slab was charged into a furnace with an atmospheric temperature of 1000 °C 4 min after casting started and held; and Condition 3, in which the slab was charged into a furnace with an atmospheric temperature of 1100 °C 4 min after casting started and then changed to a furnace with an atmospheric temperature of 1000 °C 2 min later and held. FIG. 2 illustrates change in the surface temperature of the slabs with time from the start of casting under each Condition. Under Condition 1, the temperature constantly drops, and 5 min after the slab surface temperature reaches 1200 °C (6 and a half minutes after casting begins), the slab surface temperature is approximately 900 °C. Under Conditions 2 and 3, the temperature drop was suppressed by charging into a furnace and soaking at approximately 1000 °C after charging into the furnace. It can be seen that under Condition 3, the slab passes through a furnace that has a temperature 100 °C higher than the slab surface temperature when charged into the furnace, and thus uniform temperature is achieved with less temperature drop. Table 3 lists the slab temperature holding/rough rolling Conditions 1 to 3.

Next, rough rolling consisting of a total of two passes was carried out under a set of conditions including those listed in Table 3, under conditions of a second pass rolling reduction of 25 % and a strain rate of 3 s$^{-1}$ to form a sheet bar shape having a thickness of 20 mm. Subsequently, the steel was held or heated by an external heater until finish rolling, and finish rolling was started under a set of conditions including those listed in Table 3. Final finishing temperature: finish rolling was carried out at 800 °C to 1050 °C to produce hot-rolled sheets having a thickness of 2.0 mm, then cooling to 650 °C or less in 100 s.

Test pieces were taken from portions of the obtained hot-rolled sheets by the method described above, and the precipitated Al content was determined. Table 3 lists the precipitated Al content and the values obtained by dividing the precipitated Al content by the acid-soluble Al content (precipitated Al/Sol. Al).

The hot-rolled sheets were subjected to hot-rolled sheet annealing at a soaking temperature of 1000 °C for a soaking time of 20 s, and then scale was removed by pickling. The hot-rolled sheets were then cold-rolled to a final sheet thickness of 0.23 mm to obtain cold-rolled sheets. The cold-rolled sheets were subjected to annealing for decarburization and primary recrystallization to obtain decarburized annealed sheets. Thereafter, an annealing separator mainly composed of MgO was applied to the surface of each decarburized annealed sheet, and final annealing including a secondary recrystallization process and a purification process was carried out under a set of conditions including a maximum temperature of 1150 °C and a soaking time of 8 h to obtain final annealing steel sheets. An insulation coating consisting of 60 % colloidal silica and aluminum phosphate was applied to the surface of the final annealing steel sheets and baked at 800 °C to obtain the final grain-oriented electrical steel sheets.

32 Epstein test pieces were taken from each of the obtained grain-oriented electrical steel sheets, and magnetic flux density ($B_8$) was measured by the Epstein test. Average values of magnetic flux density ($B_8$) are listed in Table 3. As is clear from Table 3, the grain-oriented electrical steel sheets produced under conditions according to the present disclosure have good magnetic properties.

Table 3

| No. | Cooling condition | Rough rolling | | Time between rough rolling and finish rolling (min) | Finish rolling preheating | Slab surface temp. at start of finishing rolling (°C) | Hot-rolled sheet | | Product sheet | Classification |
| | | Start time (*) (min) | Slab surface temp. at start of rough rolling (°C) | | | | Precipitated Al (ppm) | Precipitated Al/sol.Al | $B_8$ (T) | |
|---|---|---|---|---|---|---|---|---|---|---|
| 1 | Condition 1 | 4 | 990 | 2 | No | 880 | 13 | 0.13 | 1.903 | Example |
| 2 | | 4 | 990 | 5 | No | 840 | 27 | 0.27 | 1.849 | Comparative Example |
| 3 | | 4 | 990 | 5 | Yes | 1000 | 14 | 0.14 | 1.903 | Example |
| 4 | | 7 | 870 | 3 | No | 810 | 32 | 0.32 | 1.759 | Comparative Example |
| 5 | | 7 | 870 | 3 | Yes | 950 | 29 | 0.29 | 1.820 | Comparative Example |
| 6 | | 11 | 810 | 3 | Yes | 950 | 33 | 0.33 | 1.755 | Comparative Example |
| 7 | Condition 2 | 7 | 950 | 3 | No | 850 | 18 | 0.18 | 1.900 | Example |
| 8 | | 7 | 950 | 3 | Yes | 1000 | 17 | 0.17 | 1.902 | Example |
| 9 | | 20 | 990 | 3 | No | 850 | 24 | 0.24 | 1.899 | Example |
| 10 | | 20 | 990 | 3 | Yes | 1000 | 23 | 0.23 | 1.898 | Example |
| 11 | | 25 | 990 | 3 | Yes | 1000 | 30 | 0.30 | 1.800 | Comparative Example |
| 12 | Condition 3 | 7 | 1000 | 2 | No | 880 | 15 | 0.15 | 1.902 | Example |
| 13 | | 11 | 995 | 2 | No | 880 | 17 | 0.17 | 1.900 | Example |
| 14 | | 20 | 990 | 2 | No | 880 | 22 | 0.22 | 1.899 | Example |
| 15 | | 25 | 990 | 2 | No | 880 | 29 | 0.29 | 1.822 | Comparative Example |

(*) Rough rolling start time on horizontal axis of time in FIG. 2.

[Example 4]

From molten steel having a chemical composition containing C: 0.04 %, Si: 3.2 %, Mn: 0.06 %, acid-soluble Al: 50 ppm, S: 30 ppm, N: 50 ppm, Se: 1 ppm, Te: 0.3 ppm, and O: 10 ppm, with the balance being Fe and inevitable impurity, hot-rolled sheets were produced using a production line with the following specifications and under the following conditions.

1) [Continuous casting machine] casting thickness: 80 mm
2) [Continuous casting machine] casting speed: 5 m/min
3) [First heat treatment apparatus] post-casting cooling zone length: 15 m (required passage time: 3 min)
4) [First heat treatment apparatus] natural cooling section after cooling zone until rough rolling: 20 m (required passage time: 4 min)
5) [Rougher] 3 stands, WR diameter: 750 mm (3-stand rolling reduction 35 %)
6) [Rougher] delivery bar thickness: 25 mm (delivery speed 16 m/min)
7) [Second heat treatment apparatus] natural cooling section until finish rolling: 60 m (required passage time 3.8 min)
8) [Finisher] 7 stands, WR diameter: 700 mm
9) [Finisher] delivery sheet thickness: 2.5 mm (delivery speed 160 m/min)
10) [Third heat treatment apparatus] natural cooling section after finish rolling: 50 m (required passage time 0.3 min)
11) [Third heat treatment apparatus] cooling zone length: 200 m (required passage time: 1.3 min)

Temperature was controlled in 4), 7), and 10), and feedback was provided to the previous process to appropriately control the casting speed in 2) and the coolant control in the cooling zone in 3). Coil temperature after 11) was 650 °C or less. For Example 4, hot-rolled sheets were produced under a set of conditions corresponding to claim 1.

The obtained hot-rolled coil was divided into 10 tonne portions, and the hot-rolled sheets were annealed at a soaking temperature of 1030 °C for a soaking time of 50 s. After removing scale by pickling, the sheets were cold-rolled to a final sheet thickness of 0.27 mm. The cold-rolled sheets were heated to 800 °C at a heating rate of 150 °C/s, and then soaked in a $N_2$-$H_2$ mixed wet gas to decarburize, producing decarburized annealed sheets. Thereafter, an annealing separator mainly composed of MgO was applied to the surface of each decarburized annealed sheet, and final annealing including a secondary recrystallization process and a purification process was carried out under a set of conditions including a maximum temperature of 1200 °C and a soaking time of 10 h to obtain final annealing steel sheets. An insulation coating consisting of 60 % colloidal silica and aluminum phosphate was applied to the surface of the final annealing steel sheets and baked at 850 °C to obtain the final grain-oriented electrical steel sheets.

From the obtained coil of a grain-oriented electrical steel sheet, 32 Epstein test pieces were taken every 200 m in the rolling direction of the coil, and the magnetic flux density ($B_8$) was measured by the Epstein test. The magnetic flux density ($B_8$) was 1.903 ± 0.003 T, which showed extremely little variation. By applying the method of the present disclosure, unlike a conventional slab reheating method, the entire length of the coil is continuously treated, making it possible to produce a coil (hot-rolled sheet) that is almost free from the effects of non-steady portions such as slab ends and unevenness during slab heating over the entire length of the coil.

[Example 5]

Hot-rolled sheets were produced from molten steel having the same chemical composition as in Example 4 using a production line having the following specifications and under the following conditions.

1) [Continuous casting machine] casting thickness: 80 mm
2) [Continuous casting machine] casting speed: 3 m/min
3) [First heat treatment apparatus] post-casting cooling zone length: 15 m (required passage time: 5 min)
4) [First heat treatment apparatus] natural cooling section after cooling zone until rough rolling: 20 m (required passage time 6.7 min)
5) [Rougher] 3 stands, WR diameter: 750 mm (3-stand rolling reduction 38 %)
6) [Rougher] delivery bar thickness: 20 mm (delivery speed 12 m/min)
7) [Second heat treatment apparatus] natural cooling section until finish rolling: 60 m (required passage time 5 min)
8) [Finisher] 7 stands, WR diameter: 700 mm
9) [Finisher] delivery sheet thickness: 2.0 mm (delivery speed 120 m/min)
10) [Third heat treatment apparatus] natural cooling section after finish rolling: 50 m (required passage time 0.4 min)
11) [Third heat treatment apparatus] cooling zone length: 200 m (required passage time: 1.7 min)

In the above processing, the time required for passing through the natural cooling section after the cooling zone and before rough rolling exceeds 5 min, and therefore an enclosure was provided around the slab, heating was carried out in a nitrogen gas environment, and the slab surface was kept at a constant temperature of 1100 °C. Further, in order to shorten the passage time from rough rolling to finish rolling, the bar thickness after rough rolling was decreased. In order to deal with the drop in surface temperature of the thinner bar, a bar heater was provided between the rough rolling and finish rolling, and the finisher entry temperature was 1100 °C. Coil temperature after 11) was 650 °C or less. For Example 5, hot-rolled sheets were produced under a set of conditions corresponding to claim 2.

The obtained hot-rolled coil was divided into 10 tonne portions, and the hot-rolled sheets were annealed at a soaking temperature of 1030 °C for a soaking time of 50 s. After removing scale by pickling, the sheets were cold-rolled to a final sheet thickness of 0.23 mm. The cold-rolled sheets were heated to 800 °C at a heating rate of 150 °C/s, and then soaked in a $N_2$-$H_2$ mixed wet gas to decarburize, producing decarburized annealed sheets. Thereafter, an annealing separator mainly composed of MgO was applied to the surface of each decarburized annealed sheet, and final annealing including a secondary recrystallization process and a purification process was carried out under a set of conditions including a maximum temperature of 1200 °C and a soaking time of 10 h to obtain final annealing steel sheets. An insulation coating consisting of 60 % colloidal silica and aluminum phosphate was applied to the surface of the final annealing steel sheets and baked at 850 °C to obtain the final grain-oriented electrical steel sheets.

From the obtained coil of a grain-oriented electrical steel sheet, 32 Epstein test pieces were taken every 200 m in the rolling direction of the coil, and the magnetic flux density ($B_8$) was measured by the Epstein test. The magnetic flux density ($B_8$) was 1.901 ± 0.002 T, which showed extremely little variation. By applying the method of the present disclosure, unlike a conventional slab reheating method, the entire length of the coil is continuously treated, making it possible to produce a coil (hot-rolled sheet) that is almost free from the effects of non-steady portions such as slab ends and unevenness during slab heating over the entire length of the coil.

INDUSTRIAL APPLICABILITY

The present disclosure can be applied to production of grain-oriented electrical steel sheets.

REFERENCE SIGNS LIST

| | |
|---|---|
| 100 | production line for a grain-oriented electrical steel sheet |
| 1 | continuous casting machine |
| 2 | rougher |
| 3 | finisher |
| 4 | coiler |
| 5 | first heat treatment apparatus |
| 6 | second heat treatment apparatus |
| 7 | third heat treatment apparatus |
| 8 | temperature measurer |
| 20 | final stand |

**Claims**

1. A method of producing a grain-oriented electrical steel sheet, the method comprising:

   a process of casting molten steel having a chemical composition containing C: 0.08 mass% or less, Si: 2.0 mass% or more and 4.5 mass% or less, Mn: 0.5 mass% or less, acid-soluble Al: 20 mass ppm or more and 120 mass ppm or less, S: less than 50 mass ppm, and N: less than 80 mass ppm, with the content of Se, Te, and O each suppressed to less than 50 mass ppm, and the balance being Fe and inevitable impurity, to obtain a slab having a thickness of 30 mm to 180 mm;
   a process of subjecting the slab to rough rolling and finish rolling to obtain a hot-rolled sheet, wherein

   (I) the rough rolling is started in 5 min or less from a time when a surface temperature of the slab drops to 1200 °C, while the surface temperature of the slab is in a range from 900 °C to 1150 °C, and
   (II) after completion of the rough rolling, while maintaining the surface temperature of the slab in a range from 850 °C to 1200 °C, starting the finish rolling in 5 min or less from the completion of the rough rolling;

   a process, after the finish rolling is completed, of cooling the hot-rolled sheet under a condition that a surface temperature of the hot-rolled sheet is lowered to 650 °C in a cooling time of 200 s or less; and

subsequent processes of cold rolling, decarburization annealing, and final annealing.

2. A method of producing a grain-oriented electrical steel sheet, the method comprising:

a process of casting molten steel having a chemical composition containing C: 0.08 mass% or less, Si: 2.0 mass% or more and 4.5 mass% or less, Mn: 0.5 mass% or less, acid-soluble Al: 20 mass ppm or more and 120 mass ppm or less, S: less than 50 mass ppm, and N: less than 80 mass ppm, with the content of Se, Te, and O each suppressed to less than 50 mass ppm, and the balance being Fe and inevitable impurity, to obtain a slab having a thickness of 30 mm to 180 mm;

a process, after a surface temperature of the slab is lowered to 1200 °C or less, of holding the slab in an atmosphere of 1000 °C or more and 1250 °C or less for 5 min to 20 min;

a subsequent process of subjecting the slab to rough rolling and finish rolling to obtain a hot-rolled sheet, wherein

(I) the rough rolling is started while the surface temperature of the slab is in a range from 900 °C to 1150 °C, and

(II) after completion of the rough rolling, while maintaining the surface temperature of the slab in a range from 850 °C to 1200 °C, starting the finish rolling in 5 min or less from the completion of the rough rolling;

a process, after the finish rolling is completed, of cooling the hot-rolled sheet under a condition that a surface temperature of the hot-rolled sheet is lowered to 650 °C in a cooling time of 200 s or less; and

subsequent processes of cold rolling, decarburization annealing, and final annealing.

3. The method of producing a grain-oriented electrical steel sheet according to claim 1 or 2, wherein the rough rolling is carried out in a final stand under conditions of a rolling reduction of 20 % or more and 50 % or less and a strain rate of 1.0 $s^{-1}$ or more and 50 $s^{-1}$ or less.

4. The method of producing a grain-oriented electrical steel sheet according to any one of claims 1 to 3, wherein after completion of the rough rolling, before the finish rolling, the slab is subjected to a heat treatment to maintain the surface temperature of the slab in a range from 850 °C to 1200 °C.

5. The method of producing a grain-oriented electrical steel sheet according to any one of claims 1 to 4, wherein the chemical composition further contains, in mass%, one or more selected from the group consisting of Ni: 0.005 % to 1.50 %, Sn: 0.001 % to 0.50 %, Sb: 0.005 % to 0.50 %, Cu: 0.01 % to 0.50 %, P: 0.0050 % to 0.50 %, Cr: 0.01 % to 1.50 %, Mo: 0.01 % to 0.50 %, B: 0.0001 % to 0.0200 %, Nb: 0.0005 % to 0.0100 %, Bi: 0.0001 % to 0.0200 %, and Ti: 0.0001 % to 0.0200 %.

6. A production line for a grain-oriented electrical steel sheet, the production line comprising, in order:

a continuous casting machine configured to continuously cast molten steel to produce a slab;

a rougher configured to carry out rough rolling on the slab;

a finisher configured to carry out finish rolling on the slab after the rough rolling to produce a hot-rolled sheet; and

a coiler configured to coil the hot-rolled sheet;

as well as:

a first heat treatment apparatus disposed between the continuous casting machine and the rougher and configured to adjust a surface temperature of the slab to 900 °C or more and 1200 °C or less;

a second heat treatment apparatus disposed between the rougher and the finisher and configured to adjust the surface temperature of the slab after the rough rolling to 850 °C or more and 1200 °C or less; and

a third heat treatment apparatus disposed between the finisher and the coiler and configured to adjust a surface temperature of the hot-rolled sheet to 650 °C or less in 200 s or less after the end of the finish rolling, wherein the production line has a sheet passing capacity for passing the slab from the rougher to the finisher in 5 min or less.

7. The production line for a grain-oriented electrical steel sheet according to claim 6, wherein the rougher has a rolling capacity in a final stand such that a rolling reduction is 20 % or more and 50 % or less and a strain rate is 1.0 $s^{-1}$ or more and 50 $s^{-1}$ or less.

8. A hot-rolled sheet for a grain-oriented electrical steel sheet, the hot-rolled sheet having a chemical composition containing C: 0.08 mass% or less, Si: 2.0 mass% or more and 4.5 mass% or less, Mn: 0.5 mass% or less, acid-soluble Al: 20 mass ppm or more and 120 mass ppm or less, S: less than 50 mass ppm, and N: less than 80 mass ppm, with the content of Se, Te, and O each suppressed to less than 50 mass ppm, and the balance being Fe and inevitable impurity, wherein a value obtained by dividing the content of precipitated Al by the content of the acid-soluble Al is 0.25 or less.

9. The hot-rolled sheet for a grain-oriented electrical steel sheet according to claim 8, wherein the chemical composition further contains, in mass%, one or more selected from the group consisting of Ni: 0.005 % to 1.50 %, Sn: 0.001 % to 0.50 %, Sb: 0.005 % to 0.50 %, Cu: 0.01 % to 0.50 %, P: 0.0050 % to 0.50 %, Cr: 0.01 % to 1.50 %, Mo: 0.01 % to 0.50 %, B: 0.0001 % to 0.0200 %, Nb: 0.0005 % to 0.0100 %, Bi: 0.0001 % to 0.0200 %, and Ti: 0.0001 % to 0.0200 %.

EP 4 656 743 A1

# FIG. 1

# FIG. 2

EP 4 656 743 A1

## INTERNATIONAL SEARCH REPORT

| International application No. |
|---|
| **PCT/JP2024/013321** |

### A. CLASSIFICATION OF SUBJECT MATTER

***C21D 8/12***(2006.01)i; ***C22C 38/00***(2006.01)i; ***C22C 38/60***(2006.01)i; ***H01F 1/147***(2006.01)i
FI:   C21D8/12 C; C22C38/00 303U; C22C38/60; H01F1/147 175

According to International Patent Classification (IPC) or to both national classification and IPC

### B. FIELDS SEARCHED

Minimum documentation searched (classification system followed by classification symbols)

C21D8/12; C21D9/46; C22C38/00-C22C38/60; H01F1/147

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2011/007817 A1 (NIPPON STEEL CORPORATION) 20 January 2011 (2011-01-20) | 6 |
| | claims, paragraphs [0030], [0037], [0044], [0067] | |
| Y | | 7 |
| A | | 1-5, 8-9 |
| Y | JP 1-165722 A (KAWASAKI SEITETSU KK) 29 June 1989 (1989-06-29) | 7 |
| | claims, fig. 1 | |
| A | | 1-6, 8-9 |
| X | JP 2013-60653 A (JFE STEEL CORPORATION) 04 April 2013 (2013-04-04) | 8-9 |
| | claims, paragraphs [0022]-[0025], fig. 1 | |
| A | | 1-7 |
| A | JP 2002-212639 A (NIPPON STEEL CORPORATION) 31 July 2002 (2002-07-31) | 1-9 |
| | entire text | |

☑ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 June 2024** | **25 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| International application No. |
| --- |
| **PCT/JP2024/013321** |

### C. DOCUMENTS CONSIDERED TO BE RELEVANT

| Category* | Citation of document, with indication, where appropriate, of the relevant passages | Relevant to claim No. |
| --- | --- | --- |
| A | WO 2018/084203 A1 (JFE STEEL CORPORATION) 11 May 2018 (2018-05-11)<br>    entire text, all drawings | 1-9 |
| A | CN 1850430 A (WUHAN SCIENCE AND TECHNOLOGY UNIV.) 25 October 2006 (2006-10-25)<br>    entire text | 1-9 |

INTERNATIONAL SEARCH REPORT
Information on patent family members

International application No.

**PCT/JP2024/013321**

| Patent document cited in search report | | | Publication date (day/month/year) | Patent family member(s) | | | Publication date (day/month/year) |
|---|---|---|---|---|---|---|---|
| WO | 2011/007817 | A1 | 20 January 2011 | US | 2012/0111455 | A1 | |
| | | | | claims, paragraphs [0065], [0073], [0081], [0104] | | | |
| | | | | EP | 2455498 | A1 | |
| | | | | CN | 102471819 | A | |
| | | | | KR | 10-2012-0042980 | A | |
| | | | | RU | 2012105470 | A | |
| | | | | BR | 112012001161 | A2 | |
| | | | | IN | 1442DEN2012 | A | |
| | | | | PL | 2455498 | T3 | |
| JP | 1-165722 | A | 29 June 1989 | (Family: none) | | | |
| JP | 2013-60653 | A | 04 April 2013 | (Family: none) | | | |
| JP | 2002-212639 | A | 31 July 2002 | (Family: none) | | | |
| WO | 2018/084203 | A1 | 11 May 2018 | US | 2019/0256938 | A1 | |
| | | | | entire text, all drawings | | | |
| | | | | EP | 3536813 | A1 | |
| | | | | CN | 109923222 | A | |
| | | | | KR | 10-2019-0075986 | A | |
| | | | | BR | 112019008529 | A2 | |
| | | | | RU | 2710243 | C1 | |
| CN | 1850430 | A | 25 October 2006 | (Family: none) | | | |

Form PCT/ISA/210 (patent family annex) (July 2022)

27

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 1965559 A
- JP S40015644 B
- JP S5113469 B
- JP 2000129356 A
- JP 2008069391 A
- JP 50079442 A
- JP 48039338 A